Europäisches Patentamt

European Patent Office

Office européen des brevets

(11) Publication number: 0 141 564
A2

# (12) EUROPEAN PATENT APPLICATION

(21) Application number: 84307036.8

(22) Date of filing: 15.10.84

(51) Int. Cl.⁴: E 01 F 9/01
E 01 F 13/00

(30) Priority: 14.10.83 GB 8327641

(43) Date of publication of application:
15.05.85 Bulletin 85/20

(84) Designated Contracting States:
BE DE FR GB NL

(71) Applicant: GLASDON LIMITED
Preston New Road
Blackpool FY4 4UL(GB)

(72) Inventor: Lloyd, John
9 Cavendish Road
St. Anns Lancashire(GB)

(74) Representative: Allman, Peter John
Marks and Clerk Scottish Life House Bridge Street
Manchester M3 3DP(GB)

(54) A base to maintain an upstanding element.

(57) A base to maintain an element in an upstanding state, the base comprising a container formed of moulded plastics material and having mounted thereon or being arranged to be engaged by an element to be maintained upstanding above the base. The container has a lower part to stand on a floor or ground surface, and an upper covering wall forming at least one upwardly open recess or tray. The base has a shape enabling it to stand stably and to increase the stability or resistance to upset the base so as to maintain said element upstanding when the base is in use, the base can be ballasted by liquid, slurry, particulate or lumpy material introduced into the interior of the container through an access opening leading thereinto and/or by ballast loaded into the tray.

EP 0 141 564 A2

Croydon Printing Company Ltd.

# A BASE TO MAINTAIN AN UPSTANDING ELEMENT

This invention concerns a base to maintain an upstanding element.

According to the invention there is provided a base to maintain an element in an upstanding state, said base comprising a container formed of moulded plastics material, said container having mounted thereon or being arranged to be engaged by an element to be maintained upstanding above the base, said container having a lower part to stand on a floor or ground surface, and an upper covering wall of the container forming at least one upwardly open recess or tray means, said base having a shape enabling it to stand stably and wherein, to increase the stability or resistance to upset of the base so as to maintain said element upstanding when the base is in use, said base can be ballasted by liquid, slurry, particulate or lumpy material introduced into the interior of the container through an access opening leading thereinto and/or by ballast mass loaded into the tray means.

The element to be maintained upstanding may be a post or upright or upstanding cone, for example a road traffic cone. The post or upright may support a light, and/or a sign and/or support members, for example horizontal rails, forming in conjunction with other posts and members a barrier or de-lineator which may be used to indicate closure of a road or street or provide a warning fence alongside road works. The light or sign may be used for road traffic warning or information purposes.

The base which may be of any desired shape may have relatively low height compared with its side or diameter dimensions so it can stand substantially stably on the ground over an adequate or not inconsiderable area. It can be in the form of a closed container of moulded plastics with an access hole leading into its interior. That hole is closable preferably by a removable plug or cap. The top wall of the container may be recessed to define a well or tray arrangement surrounded by a rim which may extend about the periphery of the base.

The element to be maintained upright may ascend from the tray arrangement. For example the container may be formed with an opening, which may be central of the tray arrangement, in which opening a lower end of the element may be permanently or removably fitted. The lower end of the element may be a snap-fit in the opening. If desired the element may be snap-fitted in the opening whilst the base is still warm from moulding so that when the plastics cools or sets in its shape, the base permanently engages the element. An upstanding collar which may be of similar height to the rim, may surround the hole.

3.

To ballast the base, the container may be filled with ballast capable of passing through the access hole, for example liquid or slurry, or material in the form of particles of small lumps and/or the tray may be loaded with external ballast, for example soil or stones or excavated spoil, for example from road works, or other weighty solid matter which may be bagged for example bags of sand.

As it is optional whether the base is ballasted internally or externally, it may be pre-ballasted internally before use when it is to be used at a location where ballast is not readily available, or ballasted externally at the site of use where suitable solid ballast is available.

The invention will now be further described, by way of example, with reference to the accompanying drawings in which :-

Fig. 1 is a perspective view of a base formed according to the invention mounted on a lower end of an upright element formed by a post;

Fig. 2 is a fragment of Fig. 1 and partly in section,

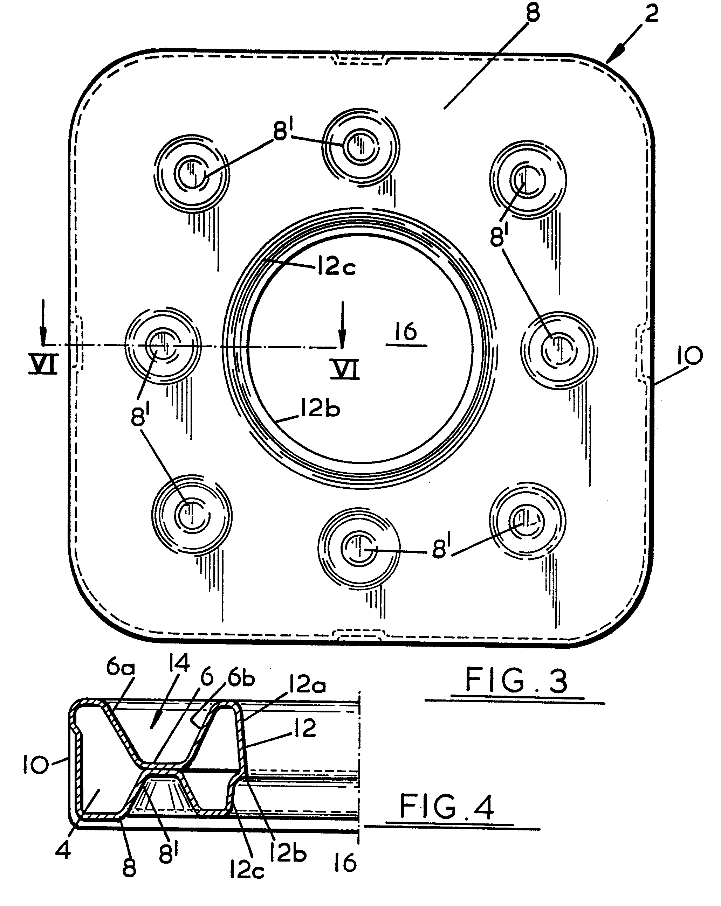

Fig. 3 is a plan view, on enlarged scale, of the underneath of the base in Fig. 1, and

Fig. 4 is section on line IV - IV in Fig. 3.

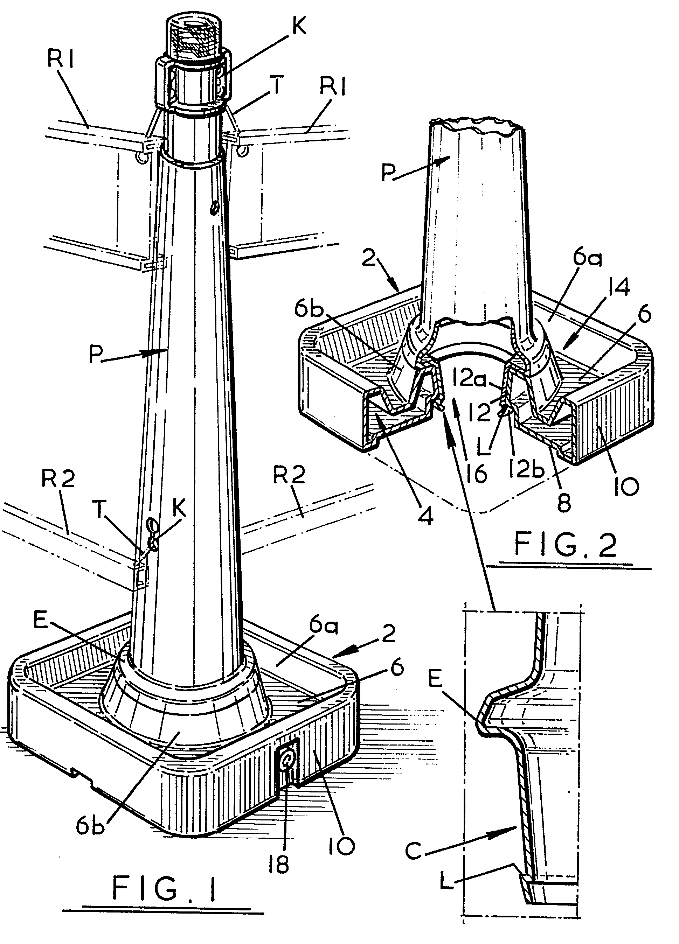

In Figs. 1 and 2 an upright hollow post P of plastics is to be maintained upright by a base 2. The post may be used to hold barrier rails R1 and R2

4.

attached to it by headed tethers T engaging keyhole slots K with which the post is provided.

The low base 2 of moulded plastics and square shape in plan defines a hollow container 4 having top bottom and side walls 6, 8, 10, 12. The top wall 6 is dished to form a tray 14 surrounded by an outer peripheral rim 6a. Centrally of the tray is a through circular opening 16 bounded by the inner side wall 12 which has a conical shaped upper lead-in 12a terminating in annular shoulder 12b extending into a wider annular part 12c. Access to the interior of the container 4 is through a hole closed by a removable plug 18. At intervals the base of the tray 14 is supported by hollow cone formations 8' in the bottom 8.

The tray 14 is of annular channel form having an inner peripheral wall formed by a collar constituted by wall parts 6b, 12a surrounding the opening 16.

The post P is a snap-fit in opening 16. For this purpose the lower end of the post has conical part C with an annular stepped lip L to engage the shoulder 12b. The post also has a collar or excrescence E which sits on the collar 6b, 12a of the base.

CLAIMS:

1. A base to maintain an element in an upstanding state, said base comprising a container formed of moulded plastics material, said container having mounted thereon or being arranged to be engaged by an element to be maintained upstanding above the base, said container having a lower part to stand on a floor or ground surface, and an upper covering wall of the container forming at least one upwardly open recess or tray means, said base having a shape enabling it to stand stably and wherein, to increase the stability or resistance to upset the base so as to maintain said element upstanding when the base is in use, said base can be ballasted by liquid, slurry, particulate or lumpy material introduced into the interior of the container through an access opening leading thereinto and/or by ballast mass loaded into the tray means.

2. A base according to claim 1, wherein the base has a relatively low height compared with its horizontal diameter dimensions which it stands substantially stably on the ground.

3. A base according to claim 2, wherein the base is in the form of a closed container of moulded plastics with an access hole leading into its interior.

4. A base according to claim 3, wherein the container has a recessed top wall which deefines a tray surrounded by a rim extending about the periphery of the base.

5. A base according to any preceding claim, wherein the container is formed with an opening located centrally of the tray in which opening a lower end of the element is snap-fitted.

6. A base according to claim 5, wherein the element is snap-fitted in the opening whilst the base is still warm from moulding so that when the plastics sets the base permanently engages the element.

0141564

FIG. 1

FIG. 2

CRC

FIG. 3

FIG. 4